# NOUVEAU FASCICULE DE BREVET EUROPEEN

(11) **EP 0 524 298 B2**
(45) Date de publication et mention de la décision concernant l'opposition: **06.04.2005**
(45) Mention de la délivrance du brevet: 15.01.1997
(21) Numéro de dépôt: 92905742.0
(22) Date de dépôt: 10.02.1992
(51) Int. Cl.: A23C 19/028, A23C 9/142, A23C 20/00, A23J 3/10

(54) **PROCEDE DE GELIFICATION THERMIQUE INSTANTANEE DE SOLUTIONS D'UNE CASEINE, PAR MODIFICATION DE LA TENEUR EN IONS ALCALINS, COAGULUMS AINSI OBTENUS, ET LEUR APPLICATION NOTAMMENT A L'OBTENTION DE PRODUITS ALIMENTAIRES**
VERFAHREN ZUR SPONTANEN THERMISCHEN GELIERUNG EINER LÖSUNG EINES KASEINS DURCH MODIFIZIERUNG DES GEHALTES AN ALKALIIONEN, AUF DIESE WEISE ERHALTENE KOAGULATE, UND DEREN VERWENDUNG INSBESONDERE ZUR HERSTELLUNG VON NAHRUNGSMITTELN
METHOD FOR INSTANTANEOUS THERMAL GELIFICATION OF A SOLUTION OF A CASEIN, BY MODIFYING THE ALKALINE ION CONTENT, COAGULUMS THUS OBTAINED, AND APPLICATION THEREOF PARTICULARLY TO OBTAIN FOOD PRODUCTS

(30) Priorité: 08.02.1991 FR 9101450
(43) Date de publication de la demande: 27.01.1993
(73) Titulaire: BONGRAIN S.A., 78220 Viroflay (FR)
(72) Inventeur: DAME-CAHAGNE, Michèle 22, allée de la Bergerie, F-91190 Gif-sur-Yvette (FR); MOURET, Pascale, F-28210 Nogent-le-Roi (FR); FROUIN, André, F-78000 Versailles (FR); AUDIDIER, Yves, F-91370 Verrières-le-Buisson (FR)
(74) Mandataire: Le Coupanec, Pascale
(86) Numéro de dépôt international: PCT/FR1992/000113
(87) Numéro de publication internationale: WO 1992/014367

(56) Documents cités:
- EP-A- 0 261 586
- EP-A- 0 366 541
- CA-A- 1 151 156
- US-A- 2 501 445
- US-A- 3 870 801
- US-A- 4 051 269
- US-A- 4 391 750
- US-A- 4 424 151
- US-A- 4 497 834
- US-A- 4 655 127
- US-A- 4 675 201
- Patent Abstracts of Japan, vol. 12, no. 338 (C-527)[3185], 12 septembre 1988, & JP,A,63098350 (SNOW BRAND MILK PROD. CO., LTD) 28 avril 1988, voir l'abrégé
- Journal of Dairy Science, vol. 71, suppl. 1, 1988, R. RAYNES et al.: "Sensory and curd characteristics of cottage cheese manufactured from 16% total solid retentate", page 81, abrégé no. D59, voir article complet
- Journal of Dairy Science, vol. 61, no. 7, juillet 1978, J.-L. MAUBOIS et al.: "Making Ricotta cheese by ultrafiltration", pages 881-884, voir page 882, colonnes 1-2; page 883, colonne 1 - page 884, colonne 1; tableau 2
- J.R. Whitaker, S. Tannenbaum: Food proteins, ISBN 0-87055-230-9, Westport 1977, p. 303
- Noble P. Wong (ed.): Fundamentals of Dairy Chemistry, ISBN 0-442-20489-2, 3rd edition 1988, p. 142

## Description

La présente invention a pour objet un procédé de gélification instantanée, en l'absence d'agent coagulant, à un pH supérieur à son pH isoélectrique, de solutions d'une caséine.

L'invention a également pour objet un gel pouvant être obtenu par ledit procédé, ainsi que l'utilisation d'un tel gel également appelé coagulum dans la suite de la description dans la préparation d'un produit alimentaire.

Le procédé de l'invention est applicable notamment aux caséines du lait et aux protéines analogues.

Le brevet US 3 870 801 décrit des compositions aqueuses fluides, sous la forme de phases mésomorphes, contenant une protéine végétale et un sel hydrosoluble en quantité suffisante pour maintenir la protéine à l'état dissous. De telles plases mésomorphes sont coagulables par la chaleur.

La coagulation du lait résulte des modifications physico-chimiques intervenant au niveau des micelles de caséines. Les deux types de coagulation connus à ce jour, et largement utilisés dans les technologies laitières et fromagères, sont induits soit par action d'enzymes coagulantes, comme par exemple la présure, soit par acidification jusqu'au pH isoélectrique des caséines, et produisent un coagulum appelé aussi "caillé" et un résidu liquide appelé lactosérum.

L'action de la présure se traduit par l'attaque de la caséine kappa, qui est coupée au niveau des résidus 105 et 106, et entraîne des modifications de la micelle : la charge nette est diminuée et la surface de la micelle devient plus hydrophobe. Ces changements modifient les équilibres entre les forces attractives et répulsives entre les micelles, et lorsque le taux d'hydrolyse de la kappa caséine est suffisant, il y a coagulation, et formation d'un réseau de micelles de para-caséines.

L'acidification du lait se traduit également par une coagulation, selon un processus similaire (chute de la valeur absolue du potentiel zêta) lorsqu'on atteint le pH isoélectrique de la caséine, mais les micelles ne sont pas conservées : en effet, le phosphate de calcium colloïdal, qui stabilisait les micelles, se trouve solubilisé par l'acidification. Les caillés lactiques sont donc fortement décalcifiés, les minéraux étant entraînés avec le sérum.

On sait par ailleurs que les caséines, dans leur environnement naturel sont remarquablement stables vis-à-vis de traitements thermiques : il faut en effet traiter le lait sous pression à des températures de l'ordre de 130°C pendant 10 à 15 minutes, ou à 115°C pendant 50 minutes, pour observer une floculation ; voir par exemple C. ALAIS, Science du lait, 4e éd., Editions SEPAIC, Paris, page 163.

Les protéines du lactosérum sont plus sensibles à la chaleur. Par exemple, la bêtalactoglobuline a une température de dénaturation de l'ordre de 80°C. Toutefois, dans le lait, elle ne précipite pas à cette température, mais se lie à la caséine kappa. En fait, il est difficile d'obtenir des gels par coagulation des protéines lactosériques, lorsque la concentration en ces protéines est inférieure à 5 %, alors que leur concentration dans le lait est de l'ordre de 0,6 %.

Par ailleurs, les technologies de production de fromages ou de produits laitiers utilisent également une autre matière première dérivée du lait : le rétentat issu de la concentration du lait par ultrafiltration. Ce procédé permet d'éliminer de l'eau, ainsi que des composés solubles tels que lactose, sels minéraux ou petits peptides (sans toutefois en changer notablement la concentration), alors que les composés de plus fort encombrement (globules gras, protéines) ne traversent pas la membrane et se trouvent donc concentrés dans le rétentat.

L'utilisation des rétentats en technologie fromagère a fait l'objet de nombreuses publications scientifiques, et de brevets dont l'un des plus anciens est le brevet français 2 052 121 qui décrit le procédé connu sous le nom de procédé MMV.

Dans les technologies fromagères à base de rétentat d'ultrafiltration, l'abaissement du taux relatif de lactose est quelquefois souhaité. Cet abaissement peut être réalisé par une opération connue sous le nom de diafiltration qui consiste à ajouter, avant, en cours ou en fin d'ultrafiltration un volume connu d'eau, et à prolonger l'opération d'ultrafiltration de manière à éliminer une quantité de perméat équivalente à la quantité d'eau ajoutée. Par exemple, dans le procédé décrit dans le brevet US 4 689 234, le lait est concentré par ultrafiltration et diafiltré de manière à obtenir un rapport pouvoir tampon/lactose déterminé ; on ajoute ensuite un acide, ou un précurseur d'acide, ou un ferment lactique de manière à obtenir un pH compris entre 4,9 et 5,3, puis un coagulant tel que la présure. Les caillés obtenus sont ensuite transformés en fromages par les traitements technologiques habituels.

De même, dans le procédé du brevet WO 84/01268, le lait est concentré pour produire un rétentat ayant un facteur de concentration volumique compris entre 2 et 8, et diafiltré de manière à réduire le taux de lactose ; le rétentat est ensuite maturé de façon à obtenir une chute de pH de 0,05 à 1,5 unité et coagulé par la présure. Les traitements ultérieurs de décaillage, de cuisson du caillé et d'affinage permettent d'obtenir un fromage à pâte dure.

La littérature scientifique et technique ne mentionne pas la possibilité de coaguler les micelles de caséines, dans un lait ou un rétentat, autrement que par adjonction d'enzymes coagulantes, ou par acidification importante (de manière à atteindre le pH isoélectrique des caséines), ou par l'association des deux procédés.

La présente invention concerne notamment un nouveau procédé de gélification d'un lait, d'un rétentat laitier ou de toute autre solution protéique analogue capable de coagulation au pH isoélectrique, ce procédé étant basé sur la maîtrise du taux de cations monovalents.

En effet, on a découvert que la modification de la teneur en ions alcalins, éventuellement associée à une légère acidification, permet de faire varier à volonté la température de gélification, et qu'en particulier une diminution de la teneur en ions alcalins entraîne une gélification par coagulation des micelles lors d'un traitement thermique modéré.

Les pH de gélification selon ce procédé sont éloignés du pH isoélectrique.

Il ne s'agit donc pas d'une coagulation acide. De même, la gélification intervient sans action protéolytique. Par ailleurs, les températures de gélification observées ne sont pas les températures de dénaturation des protéines du lactosérum, et le procédé fonctionne à des concentrations en protéines lactosériques insuffisantes pour entraîner la formation d'un gel de protéines sériques par dénaturation. Il s'agit en fait d'une gélification de la solution de caséines.

L'effet des minéraux alcalins a pu être démontré notamment par mesure de la température de coagulation des caséines dans un rétentat concentré 6 fois, et fortement appauvri en ions alcalins par diafiltration, auquel les différents éléments solubles éliminés avec le perméat, dont les sels minéraux, ont été rajoutés indépendamment en quantité contrôlée. A pH 6, par exemple, le rétentat considéré se gélifie lorsqu'on porte sa température à 39°C. L'ajout de sels de calcium (sous forme de phosphates), ou de magnésium (sous forme de chlorure), en quantité suffisante pour restaurer la quantité perdue par diafiltration, ne modifie aucunement le comportement du rétentat lors du traitement thermique. L'ajout de lactose ne change rien non plus. Par contre, lorsque l'on rajoute des sels de sodium et/ou de potassium, on restabilise les micelles de caséines, et la température de gélification est déplacée vers des valeurs plus élevées.

Ce résultat montre le rôle important des ions alcalins dans la stabilisation de la suspension de micelles de caséine.

Le procédé de gélification de l'invention diffère de la coagulation acide classique par le fait que les micelles ne sont pas destructurées, ni décalcifiées. Il diffère aussi de la coagulation par la présure par le fait qu'il n'y a pas de rupture de la caséine kappa. Il s'agit bien d'une gélification par coagulation des caséines, les protéines sériques n'étant pas affectées par le traitement thermique modéré.

Les conditions opératoires, à savoir la concentration en cations monovalents (sodium et/ou potassium) et le pH, gouvernent la température de coagulation des micelles.

Ainsi, par le choix du pH (supérieur au pH isoélectrique), et de la concentration en ions alcalins, il devient possible de faire varier à volonté la température de coagulation des caséines du lait, et la gélification résultante est instantanée.

La température de gélification varie dans le même sens que la variation de la concentration en ions alcalins, et dans le même sens que la variation du pH.

Par exemple, un lait ou un rétentat laitier, déminéralisé par diafiltration, acidifié jusqu'à pH 5,85, se gélifie à 40°C s'il présente un taux de cations monovalents de 0,3 millimole par gramme de caséine ; la température de gélification est portée à 67°C pour un taux de 0,5 millimole de cations monovalents par gramme de caséine. A pH 6,15, le premier rétentat (0,3 millimole par gramme) se gélifie à 77°C. Ce phénomène est observé quelle que soit la concentration en caséines, c'est-à-dire aussi bien sur un lait que sur un rétentat obtenu par ultrafiltration. Lorsque l'abaissement du taux de cations monovalents est très élevé, on peut même observer la gélification à des températures inférieures à la température ambiante.

Dans la demande de brevet FR 88 13899, on a décrit un procédé de "thermocoagulation-cuisson" de rétentats d'ultrafiltration concentrés. Dans cette demande de brevet, les taux de concentration volumique concrètement décrits sont toujours supérieurs à 5, et il est généralement nécessaire d'utiliser un agent gélifiant ou épaississant pour obtenir des produits coagulés ayant une consistance acceptable. En outre, la coagulation observée n'est pas instantanée et nécessite des temps de chauffage pouvant aller jusqu'à plusieurs heures. Le traitement thermique décrit dans cette demande de brevet correspond donc à une réaction de floculation des protéines dénaturées du lactosérum, qui précipitent en effet lorsqu'elles sont à une concentration suffisante, comme on l'a rappelé ci-dessus.

La présente invention a donc pour objet un procédé de gélification instantanée, en l'absence d'agent coagulant, à un pH supérieur au pH isoélectrique, d'une solution d'une protéine coagulable audit pH isoélectrique, ladite protéine étant une caséine. Ce procédé est tel que défini dans les revendications annexées.

Bien entendu l'opération consistant à porter la solution de protéine à la température dé gélification choisie est une opération de chauffage et la température de la solution de départ doit être choisie en conséquence, c'est-à-dire moins élevée que la température de gélification choisie.

Par convention, dans la présente demande, l'expression "solution aqueuse de protéine" désigne aussi bien une solution qu'une dispersion colloïdale de protéine (par exemple une dispersion colloïdale de micelles de caséine).

Dans la présente demande, on désigne par le mot "gélification" la transformation d'un liquide (solution ou dispersion de protéine) en un gel homogène occupant sensiblement le volume du liquide initial. On sait que l'état de gel est un état intermédiaire entre l'état solide et l'état liquide, dans lequel les molécules polymères (ici des protéines) sont structurées en un réseau empêchant les mouvements de convection de la phase liquide. On peut donner une idée schématique de la structure d'un gel en disant que la phase liquide empêche le réseau polymère de s'effondrer en une masse compacte, tandis que le réseau empêche la phase liquide de s'écouler. Ainsi, la gélification désigne un phénomène distinct de la précipitation (ou floculation) sous la forme de particules non organisées entre elles.

Il faut donc bien comprendre que le procédé de l'invention s'applique uniquement à des protéines capables de donner lieu, à leur pH isoélectrique, à une véritable réaction de gélification (telle que définie ci-dessus) et non à une simple précipitation. Ainsi, par exemple, le procédé de l'invention ne s'applique pas au protéines du lactosérum, qui précipitent, mais ne coagulent pas, lorsqu'elles sont portées à leur pH isoélectrique. Mais, bien entendu, les protéines du lactosérum peuvent être présentes dans le produit de départ, à côté des caséines, et se trouveront emprisonnées, de même que la phase liquide, dans le réseau de caséine après la coagulation.

Dans des modes d'exécution particuliers, le procédé de l'invention peut encore présenter les caractéristiques suivantes, prises isolément, ou le cas échéant, en combinaison :
- on ajuste la leneur en ions alcauns, selon la teneur du produit de départ, soit par addition de sels de sodium et/ou de potassium, soit par dilution suivie d'ultrafiltration (diafiltration) ;
- ladite solution est un rétentat d'ultrafiltration ; dans ledit rétentat, la teneur en ions alcalins peut être ajustée, notamment par diafiltration ; bien entendu, l'eau ajoutée pour la diafiltration est une eau ayant une faible teneur en ions alcalins, par exemple une teneur inférieure à 20 mg par litre ;
- ladite solution est un rétentat d'ultrafiltration de lait ; le lait est notamment un lait de vache, ou encore un lait de chèvre, de brebis, de bufflesse, etc ;
- on ajuste, si nécessaire, le pH à la valeur choisie, soit avant, soit (le plus souvent) après l'ajustement de la teneur en ions alcalins, mais bien entendu avant le traitement thermique ; l' ajustement du pH est effectué selon les méthodes usuelles ;
- ledit pH est supérieur à 5, et est en particulier supérieur d'au moins 0,5 unité de pH audit pH isoélectrique ;
- ledit pH est inférieur à 7 ;
- ledit pH est dans la gamme allant de 5,5 à 6,7 et notamment de 5,7 à 6,4, en particulier de 5,8 à 6,3 ;
- on opère de préférence à un pH de 5,8-6,3 ;
- ladite solution contient de 1 à 25 % en poids de ladite protéine, et généralement de 2 à 20 % en poids ;
- ladité solution contient de 2 à 16 % en poids de ladite protéine, par exemple de 2 à 12 % en poids et en particulier de 2 à 7 % en poids, ou encore de 2 à 5%;
- ladite solution contient de préférence de 2 à 16 % en poids de protéine ;

Les gels obtenus par le procédé de l'invention peuvent avoir des consistances variées. Cette consistance varie notamment avec la concentration en ladite protéine. Par exemple, dans le cas d'un produit de départ d'origine laitière, la dureté des gels est la résultante de la température de coagulation (donc fonction également des paramètres cations monovalents et pH), et du taux de caséines : pour une concentration en caséines de 3 %, un pH de 6,00 et un taux de cations monovalents de 0,12 millimole par gramme de caséine, la dureté du gel obtenu sera de 0,02 Newton : si la concentration en caséines est portée à 4,5 %, les autres paramètres étant inchangés, la dureté du gel sera de 0,045 Newton et pour une concentration en caséines de 18 % elle sera (toujours dans les mêmes conditions) de 0,74 Newton.

Comme indiqué ci-dessus, la température de gélification de ladite protéine selon le procédé d'invention peut être choisie à volonté, cette température pouvant être déterminée par de simples expériences de routine en faisant varier la concentration en ions alcalins, ainsi que le pH dans les gammes indiquées ci-dessus. L'expérience a montré que la température de gélification diminue lorsque la teneur en ions alcalins diminue (à un pH donné, supérieur au pH isoélectrique), et que pour une teneur donnée en ions alcalins, la température de gélification diminue lorsque le pH (supérieur au pH isoélectrique) diminue. On pourra ainsi choisir à volonté une température inférieure par exemple à 85°C, ou non supérieure à 80°C, ou bien encore inférieure à 75°C ou à 60°C. Généralement, pour ne pas allonger excessivement les temps de diafiltration, on choisira une température supérieure ou égale à 30°C.

Dans la solution de départ, la teneur en ions alcalins qui permet d'obtenir une gélification à une température donnée, le pH étant également donné, est une teneur en ions alcalins rapportée à la teneur en ladite protéine.

Généralement, pour éviter d'obtenir une gélification à une température trop élevée, la teneur en ions alcalins est inférieure à 7 millimoles par gramme de ladite protéine ; le plus souvent, on pourra opérer à des concentrations en ions alcalins inférieures à 2,5 ou à 2 millimoles par gramme de ladite protéine. On peut bien entendu opérer à des teneurs plus faibles, par exemple inférieures à 1 millimole, à 0,5 millimole, à 0,3 millimole ou à 0,15 millimole par gramme de ladite protéine, et la température de gélification sera alors d'autant moins élevée que la concentration en ions alcalins, par rapport à la protéine, sera plus faible.

Pour doser les teneurs en ions alcalins afin de mettre au point préalablement les conditions de la gélification on utilise les méthodes de dosage usuelles, en particulier par absorption atomique ou à l'aide d'électrodes spécifiques.

La solution de départ utilisée dans le procédé de l'invention peut contenir, outre ladite protéine, un ou plusieurs autres constituants pouvant être choisis notamment parmi :
- d'autres protéines, non coagulables, en particulier non coagulables dans la gamme de pH de 4,5 à 7 à une concentration inférieure à 5 % environ ; c'est par exemple le cas des protéines du lactosérum. Ces protéines interviennent alors comme charge inerte, et ne participent pas à la structure du gel;
- des sucres, par exemple à une concentration pouvant aller jusqu'à 20 % ;
- des ingrédients aromatisants ;
- des matières grasses, par exemple végétales, etc...

Par exemple, dans le cas d'un produit laitier, la solution de départ contiendra les protéines lactosériques, des sucres, tels que le lactose résiduel ou encore des sucres ajoutés.

Les ingrédients aromatisants sont par exemple des arômes naturels ou synthétiques tels que : arôme de vanille, arômes de fromage, du chocolat, etc.

La matière première utilisable pour préparer la solution protéique de départ est notamment un lait de vache, de chèvre, de brebis ou de toute autre espèce animale, contenant ou non de la matière grasse, cru ou pasteurisé, dont la composition en caséines et en cations monovalents (sodium et potassium) est connue.

Le taux de caséines nécessaire à l'obtention de la texture désirée peut être obtenu en soumettant la solution protéique de départ (par exemple le lait) à une opération d'ultrafiltration, et le taux de cations monovalents nécessaire et suffisant pour l'obtention du produit désiré est ajusté, soit par addition de sels alcalins, soit par exemple par une opération de diafiltration dans le cas ou l'on souhaite diminuer la teneur en ions alcalins. Cette diafiltration est réalisable indifféremment en début, en cours ou en fin d'ultrafiltration. On obtient une matière première modifiée contenant généralement un taux de cations monovalents compris par exemple entre 0 et 7 millimoles et préférentiellement entre 0,05 et 2 millimoles, de cations monovalents par gramme de ladite protéine coagulable. Le pH de cette matière première modifiée peut ensuite être ajusté à la valeur désirée (par exemple entre 5,0 et 7,0, de préférence entre 5,8 et 6,3), selon les méthodes connues, par ajout d'acide (acide lactique, acide chlorhydrique, etc) ou de précurseur d'acide (par exemple la glucono-deltalactone) ou encore par fermentation lactique. Le produit intermédiaire obtenu est alors gélifié thermiquement, par exemple dans un appareil de type Stéphan (à chauffage direct ou indirect) ou dans des échangeurs à surface raclée (temps de séjour : environ 10 secondes par exemple), ou encore en étuve ou en bain-marie.

La base texturée obtenue après gélification peut être ensuite mélangée à d'autres ingrédients tels que sel, sucres, arômes, matière grasse végétale ou animale, et supporte le cas échéant des traitements thermiques ultérieurs tels que des traitements de pasteurisation ou de stérilisation.

Un des avantages du procédé de l'invention est qu'il permet d'obtenir des produits stables. En effet, il n'est pas nécessaire d'utiliser des ferments lactiques, ni d'enzymes coagulantes, pour obtenir la gélification par coagulation. On peut ainsi fabriquer notamment des analogues de fromages qui ne nécessiteront pas d'affinage, à condition d'apporter l'aromatisation par une autre voie.

En prenant l'exemple d'un produit de départ d'origine laitière, l'utilisation de ce nouveau procédé de thermocoagulation des caséines permet d'obtenir toute une gamme de textures, allant de produits visqueux du type "crème dessert", à des produits du type fromages à pâte demi-dure, en passant par des produits à pâte tendre du type fromages fondus. Comme cela a été précisé précédemment, la dureté du coagulum est fonction de la concentration en caséine, de la concentration en cations monovalents, et du pH, et la texture des produits dépend en outre du type de traitement thermique utilisé : un traitement thermique réalisé avec une forte agitation donnera des textures moins dures qu'un traitement thermique "statique". L'ajout de cations monovalents (sels de sodium et/ou de potassium), éventuellement nécessaires aux qualités gustatives du produit, peut être réalisé après la formation du coagulum, sans perturbation de la texture : ces cations ajoutés n'interagissent plus avec le réseau de micelles formé, la gélification n'étant pas réversible.

Il est ainsi possible d'obtenir notamment des produits du type crème dessert, dont la particularité est qu'ils sont obtenus sans additifs texturants (gélifiants), ou de fabriquer des produits de type fromages fondus sans sels de fonte. On sait que les "sels de fonte" (tartrate, citrate, polyphosphates) favorisent l'obtention de produits fondus homogènes dans la préparation classique des fromages fondus .

Dans une variante du procédé, il est possible d'obtenir des produits fromagers à texture demi-dure, voire dure, par coagulation thermique des caséines dans des appareils permettant un traitement thermique sans effet mécanique, par exemple un tunnel à vapeur, un tunnel micro-ondes, un four de boulangerie ou de charcuterie. Dans cette application, le produit de départ (ayant par exemple une teneur en caséine de 12 à 15 % en poids) est préalablement aromatisé, standardisé en matières grasses (indifféremment d'origine animale ou végétale), puis réparti en moules ou sur un tapis, et coagulé par passage dans le tunnel à vapeur ou à micro-ondes.

Lorsqu'on souhaite réaliser un produit fortement délactosé, de manière à éliminer les risques fermentaires, la déminéralisation produite par la diafiltration nécessaire au délactosage entraîne une coagulation à basse température, ce qui est susceptible de nécessiter des contraintes d'appareillage. Dans ce cas, selon la texture désirée pour le produit fini, le taux de cations monovalents peut être ajusté par addition de sels de sodium et/ou de potassium, de façon à obtenir une température de gélification plus facilement maîtrisable (par exemple supérieure à 30°C).

Une autre variante consiste dans ce cas à concentrer le lait par ultrafiltration jusqu'à l'obtention du taux de caséines désiré, d'acidifier le produit obtenu jusqu'au pH désiré (dans les gammes mentionnées ci-dessus), et de réaliser la déminéralisation par électrodialyse. Selon la température utilisée pour l'opération d'électrodialyse, il est possible, à l'issue de l'opération, d'obtenir directement un gel, ou de gélifier le produit par chauffage.

Les contraintes de taux de cations monovalents entraînent parfois un salage différé du produit, selon la texture désiré. Dans ce cas, la quantité de sel (chlorure de sodium et/ou de potassium) nécessaire à la qualité gustative du produit est apportée par saupoudrage ou saumurage (ou tout autre procédé connu) à l'issue du traitement thermique. Le produit obtenu peut être ensuite décoré, éventuellement démoulé, emballé et refroidi indifféremment avant ou après l'une ou l'autre de ces opération. Cette technologie permet d'obtenir des fromages, ou analogues de fromages, à pâte ferme et permet également l'obtention de fromages en tranches, lorsque la coagulation est réalisée sur tapis, en couche minces (ayant par exemple une épaisseur de 1 à 5 mm) ou par tranchages des textures fermes précitées.

La présente invention a également pour objet un coagulum ou un gel caractérisé par le fait qu'il est susceptible d'être obtenu par le procédé de gélification décrit ci-dessus, au départ d'une solution contenant de la caséine, comme un rétentat de lait.

L'invention concerne notamment un tel gel qui est exempt d'agent gélifiant, exempt d'agent de coagulation (protéase), et exempt de sels de fonte.

Lorsque le coagulum obtenu selon l'invention a été préparé à température suffisamment basse, il est sensiblement exempt de protéines dénaturées. Par exemple, dans le cas d'un produit laitier coagulé à une température inférieure à 80°C, le coagulum obtenu est sensiblement exempt de protéines lactosériques dénaturées. L'un des avantages du procédé de l'invention est d'obtenir des coagulums, sans synérèse importante, avec des teneurs en caséine inférieures à 12 % en poids et même inférieures à 5 % en poids.

L'invention a également pour objet l'utilisation d'un coagulum ou gel, obtenu selon le procédé décrit précédemment, comme produit de départ dans la préparation d'un produit alimentaire, notamment un produit laitier semi-solide ou solide, selon les méthodes qui ont été décrites ci-dessus.

Les exemples suivants illustrent l'invention sans toutefois la limiter.

### EXEMPLE 1

Un lait entier pasteurisé est dilué 20 fois avec de l'eau déminéralisée, puis concentré par ultrafiltration de manière à obtenir un taux de caséines égal au taux initial. Le lait ainsi modifié contient 2,69 %. de caséines, et 0,108 millimole de cations monovalents par gramme de caséine.

Ce lait est ensuite maturé par des ferments lactiques thermophiles ajoutés à raison de 1 %, jusqu'à obtenir un pH de 6,30, puis traité thermiquement dans un appareil de type Stéphan (chauffage indirect avec agitation modérée), de manière à amener sa température à 60°C. A cette température, on observe une coagulation de l'ensemble de la masse du produit traité. A l'issue du traitement thermique, on ajoute du sucre (6 %) et du cacao, on mélange le tout et le produit est ensuite réparti en pots individuels, à chaud (60°C), puis refroidi. Ce procédé permet ainsi d'obtenir un produit de texture proche de celle d'un yaourt, non acide, aromatisé au chocolat.

La composition du produit final est la suivante : Extrait sec : 16 %, Matière grasse : 4,4 %.

### EXEMPLE 2

Un lait demi-écrémé pasteurisé (contenant 2,72 % de caséines, et 2,308 millimoles de cations monovalents par gramme de caséine) est concentré par ultrafiltration, de façon analogue à celle décrite à l'exemple 1, jusqu'à un facteur de concentration volumique de 6. Le rétentat obtenu contient 34,72 % d'extrait sec, 15,2 % de caséines, et 0,38 millimole de cations monovalents par gramme de caséine. Les protéines sériques non dénaturées représentent 14,7 % des protéines totales.

Le rétentat est ensuite acidifié jusqu'à pH 6,15 par ajout de glucono-delta-lactone, et chauffé à 75°C dans un appareil de type Stéphan. On observe la coagulation à la température de 72°C. Dans le coagulum, les protéines sériques, non dénaturées, représentent alors 14,5 % des protéines totales. Le coagulum obtenu est, après refroidissement, mélangé avec les ingrédients d'aromatisation : sel, ail et fines herbes, et traité une seconde fois dans le même mélangeur, jusqu'à une température de 80°C, de manière à assurer la conservation du produit. Le produit est dosé à chaud dans l'emballage, et operculé.

Le produit obtenu à la composition suivante : Extrait sec : 36,1 % ; Gras sur sec : 15,5 %. Il présente une texture de fromage fondu.

Dans le produit fini, les protéines sériques non dénaturées représentent encore 11,3 % des protéines totales.

### EXEMPLE 3

Un lait écrémé est concentré par ultrafiltration jusqu'à un facteur de concentration volumique de 4,5 ; le rétentat obtenu contient 11,22 % de caséine et 0,6 millimole de cations monovalents par gramme de caséine. Il est ensuite diafiltré de manière à obtenir un taux de cations monovalents de 0,30 millimole par gramme de caséine. La teneur en caséine est de 11,2 %.

Le rétentat est ensuite ensemencé avec des ferments lactiques mésophiles, à raison de 1 %, et maturé jusqu'à l'obtention d'un pH de 6,20. Le rétentat est additionné de matière grasse végétale, de manière à obtenir un taux de matière grasse, sur produit sec, de 40 %, et traité thermiquement dans un échangeur tubulaire, à 75°C, qui est la température de coagulation, pendant 10 secondes, puis refroidi. Après addition des additifs nécessaires aux qualités organoleptiques des produits (sucre, arômes vanille), un second traitement thermique est réalisé, de manière à porter le produit à 81°C pendant 10 secondes.

Le produit obtenu à la texture d'une crème dessert.

### EXEMPLE 4

Un lait demi-écrémé est dilué 2,5 fois puis concentré par ultrafiltration de manière à obtenir un rétentat contenant 10,1 % de caséines et 0,22 millimole de cations monovalent par gramme de caséine.

Le rétentat est acidifié par ajout de glucono-delta-lactone de manière à amener son pH à 6,19. Il est ensuite traité thermiquement dans un appareil à surface raclée, à 70°C (la coagulation intervenant à 60°C), puis refroidi. Le coagulum obtenu est ensuite additionné d'un arôme Cheddar, et de sel, puis est traité thermiquement dans un second échangeur à surface raclée à une température de 140°C pendant 18 secondes, puis emballé aseptiquement afin d'assurer une conservation hors froid.

Le produit obtenu se présente sous la forme d'une sauce épaisse, aromatisée au fromage.

### EXEMPLE 5

Un lait entier pasteurisé (contenant 2,49 % de caséines et 2,514 millimoles de cations monovalents par gramme de caséine) est concentré par ultrafiltration, jusqu'à obtention d'un facteur de concentration volumique de 5,2, et diafiltré de manière à obtenir un rétentat contenant 12,4 % de caséines et 0,2 millimole de cations monovalents par gramme de caséine.

Le rétentat est maturé par des ferments lactiques, comme précédemment, jusqu'à un pH de 5,85, additionné d'un arôme fromage, et placé dans un moule de forme désirée. Le moule est ensuite placé dans un four humide, à température de 150°C. La coagulation intervient lorsque le produit atteint une température de 40°C, mais le traitement thermique est prolongé de manière à obtenir une température à coeur de 80°C, afin d'assurer la conservation du produit. A la sortie du four, le produit est salé par saupoudrage (1,2 %), et operculé. On obtient dans ces conditions un produit ayant une texture de fromage à pâte ferme (reblochon jeune), non évolutif et à longue conservation.

### EXEMPLE 6

Le rétentat obtenu dans l'exemple 5 est acidifié par ajout de glucono-delta-lactone en quantité suffisant pour atteindre un pH de 6,00 et additionné d'un mélange d'arômes naturels de manière à lui conférer un arôme de fromage Beaufort. Le rétentat est ensuite coulé sur un tapis, et coagulé dans un tunnel à vapeur, de manière à atteindre une température à coeur de 80°C. La coagulation intervient lorsque le produit atteint une température de 45°C. Après coagulation, on ajoute du sel (1,2 %) par saupoudrage, puis le produit est tranché et emballé. Ce procédé permet d'obtenir des tranches d'un analogue de fromage à texture dure, au goût de Beaufort.

### EXEMPLE 7

Un lait écrémé est concentré par ultrafiltration, jusqu'à l'obtention d'un taux de caséine de 11,5 %. Ce rétentat est ensuite diafiltré de manière à réduire le taux de lactose à une valeur finale de 0,2 %, puis supplémenté en cations monovalents (NaCl et/ou KCl) de manière à obtenir une concentration finale de 0,15 millimole de cations monovalents par gramme de caséine. La teneur en caséine est 11,5 %.

Le rétentat obtenu est ensuite acidifié jusqu'à pH 6,30, sucré et aromatisé au chocolat, traité thermiquement dans un échangeur tubulaire, à 75°C (la coagulation intervenant à 65 °C), et refroidi. Il est ensuite additionné d'une culture de ferments lactiques très concentrée (10¹¹ germes/ml), à raison de 1 %, et conditionné de manière aseptique et conservé à 4°C. Le produit obtenu, ayant une texture de crème dessert, contient une forte quantité de germes lactiques, qui ne se développent pas a la température de conservation, et ne produisent pas d'acidité lactique nuisible à la perception de l'arôme chocolat.

## Revendications

1. Procédé de gélification instantanée, à une température librement choisie entre 20 et 100°C, en l'absence d'agent coagulant, à un pH supérieur au pH isoélertrique, d'une solution d'une protéine coagulable audit pH isoélectrique, ladite gélification consistant en la transformation de ladite solution en un gel homogène occupant sensiblement le volume du liquide initial, **caractérisé par le fait que** l'on utilise comme produit de départ une solution aqueuse contenant, à l'état non dénaturé, au moins une telle protéine coagulable, que ladite protéine coagulable est une caséine, que l'on ajuste la teneur en ions alcalins de ladite solution à une valeur prédéterminée, et que l'on porte ladite solution, contenant ladite caséine à une concentration au moins égale à 1,5 %, à ladite température librement choisie entre 20 et 100°C, étant entendu que ladite valeur prédéterminée est telle que ladite solution se gélifie instantanément, à ladite concentration et audit pH, à ladite ternpérature.

2. Procédé selon la revendication 1, **caractérisé par le fait que** ladite solution est un rétenlat d'ultrafiltration de lait.

3. Procédé selon la revendication 2, **caractérisé par le fait que** ledit lait est un lait de vache, de chèvre ou de brebis.

4. Procédé selon l'une quelconque des revendications 2 et 3, caraclérisé par le fait que l'on ajuste la teneur en ions alcalins dudit rétentat d'ultrafiltration par diafiltration.

5. Procédé selon l'une quelconque des revendications 1 à 4, **caractérisé par le fait que** l'on ajuste la teneur en ions alcalins par électrodialyse.

6. Procédé selon l'une quelconque des revendications précédentes, **caractérisé par le fait que** ledit pH est supérieur à 5.

7. Procédé selon une quelconque des revendications précédentes, **caractérisé par le fait que** ledit pH est supérieur d'au moins 0,5 unité de pH audit pH isoélectrique.

8. Procédé selon l'une quelconque des revendications précédentes, **caractérisé par le fait que** ledit pH est dans la gamme allant de 5,5 à 6,7, notamment de 5,7 à 6,4, et en particulier de 5,8 à 6,3.

9. Procédé selon l'une quelconque des revendications précédentes **caractérisé par le fait que** ledit pH est dans la gamme allant de 5,8 à 6,3.

10. Procédé selon l'une quelconque des revendications précédentes, **caractérisé par le fait que** ladite solution contient de 2 à 20 % en poids de ladite caséine.

11. Procédé selon l'une quelconque des revendications précédentes, **caractérisé par le fait que** ladite solution comprend de 2 à 16 % en poids, et en particulier de 2 à 12 % en poids de ladite caséine.

12. Procédé selon l'une quelconque des revendications précédentes, **caractérisé par le fait que** ladite solution contient de 2 à 7 % en poids de protéine, et en particulier de 2 à 5 %.

13. Procédé selon l'une quelconque des revendications précédentes, **caractérisé par le fait que** ladite température est inférieure à 85°C, et en particulier n'est pas supérieure à 80°C.

14. Procédé selon l'une quelconque des revendications précédentes, **caractérisé par le fait que** ladite température est inférieure à 75°C, et en particulier est inférieure à 60°C.

15. Procédé selon l'une quelconque des revendications précédentes, **caractérisé par le fait que** ladite température est supérieure ou égale à 30°C.

16. Procédé selon l'une quelconque des revendications précédentes, **caractérisé par le fait que** ladite teneur en ions alcalins est inférieure à 7 millimoles par gramme de ladite protéine.

17. Procédé selon l'une quelconque des revendications précédentes, **caractérisé par le fait que** ladite teneur en ions alcalins est inférieure à 2,5 millimoles par gramme de ladite protéine et en particulier est comprise entre 0,05 et 2 millimoles par gramme.

18. Procédé selon l'une quelconque des revendications précédentes, **caractérisé par le fait que** ladite teneur en ions alcalins est inférieure à 1 millimole par gramme de ladite protéine, et en particulier inférieure à 0,5 millimole par gramme de ladite protéine.

19. Procédé selon l'une quelconque des revendications précédentes, **caractérisé par le fait que** ladite teneur en ions alcalins est inférieure à 0,3 millimole par gramme de ladite protéine, et en particulier inférieure à 0,15 millimole par gramme de ladite protéine.

20. Procédé selon l'une quelconque des revendications précédentes, **caractérisé par le fait que** ladite solution de départ contient en outre au moins un constituant choisi parmi :
- des protéines non coagulables dans la gamme de pH 4,5 - 7 à une concentration inférieure à 5 %;
- des sucres ;
- des ingrédients aromatisants ;
- des matières grasses.

21. Gel **caractérisé par le fait qu'**il est susceptible d'être obtenu par le procédé selon l'une quelconque des revendications précédentes.

22. Gel selon la revendication 21, **caractérisé par le fait qu'**il est obtenu au départ d'un rétentat de lait.

23. Gel selon l'une quelconque des revendications 21 et 22 **caractérisé par le fait qu'**il est exempt d'agent gélifiant, d'agent de coagulation et de sels de fonte.

24. Gel selon l'une quelconque des revendications 21 à 23, **caractérisé par le fait qu'**il est exempt de protéase.

25. Gel selon l'une quelconque des revendications 21 à 24, **caractérisé par le fait qu'**il est sensiblement exempt de protéines dénaturées.

26. Gel selon l'une quelconque des revendications 21 à 25, **caractérisé par le fait que** sa teneur en ladite protéine coagulable est inférieure à 12 % en poids, et en particulier inférieure à 5 % en poids.

27. Utilisation d'un gel selon l'une quelconque des revendication 21 à 26, comme produit de départ dans la préparation d'un produit alimentaire semi-solide ou solide.

28. Utilisation d'un gel selon l'une quelconque des revendications 21 à 26, comme produit de départ dans la préparation d'un produit alimentaire laitier semi-solide ou solide.

## Patentansprüche

1. Verfahren zur spontanen Gelierung einer Lösung eines bei seinem isoelektrischen pH koagulierbaren Proteins in Abwesenheit eines Koagulationsmittels bei einem pH oberhalb des isoelektrischen pH, und einer frei gewählten Temperatur zwischen 20 und 100 °C, wobei die Gelierung aus der Umwandlung der besagten Lösung in ein homogenes Gel besteht, welches im Wesentlichen das Volumen der anfänglichen Flüssigkeit einnimmt, **dadurch gekennzeichnet, dass** man als Ausgangsprodukt eine wässrige Lösung verwendet, welche in nichtdenaturiertem Zustand mindestens eines jener koagulierbaren Proteine enthält, wobei das koagulierbare Protein ein Kasein ist, man den Gehalt der Lösung an Alkaliionen auf einen vorbestimmten Wert einstellt, und die Lösung, welche das besagte Kasein in einer Konzentration von mindestens 1,5 % enthält, bei der frei zwischen 20 und 100 °C gewählten Temperatur hält, wobei der besagte vorgegebene Wert selbstverständlich so gewählt wird, dass die Lösung bei der gegebenen Konzentration und Temperatur sowie ihrem pH-Wert spontan geliert.

2. Verfahren gemäß Anspruch 1, **dadurch gekennzeichnet, dass** die Lösung ein Retentat der Ultrafiltration von Milch darstellt.

3. Verfahren gemäß Anspruch 2, **dadurch gekennzeichnet, dass** es sich um Kuh-, Schaf- oder Ziegenmilch handelt.

4. Verfahren gemäß einem der Ansprüche 2 und 3, **dadurch gekennzeichnet, dass** man den Gehalt an Alkaliionen im Retentat der Ultrafiltration mittels der Diafiltration einstellt.

5. Verfahren gemäß einem der Ansprüche 1 bis 4, **dadurch gekennzeichnet, dass** man den Gehalt an Alkaliionen mittels Elektrodialyse einstellt.

6. Verfahren gemäß einem der vorstehenden Ansprüche, **dadurch gekennzeichnet, dass** der pH über 5 liegt.

7. Verfahren gemäß einem der vorstehenden Ansprüche, **dadurch gekennzeichnet, dass** der pH um mindestens 0,5 pH-Einheiten über dem isoelektrischen pH liegt.

8. Verfahren gemäß einem der vorstehenden Ansprüche, **dadurch gekennzeichnet, dass** der pH in einem Bereich von 5,5 bis 6,7, insbesondere von 5,7 bis 6,4 und noch spezieller von 5,8 bis 6,3 liegt.

9. Verfahren gemäß einem der vorstehenden Ansprüche, **dadurch gekennzeichnet, dass** der pH im Bereich von 5,8 bis 6,3 liegt.

10. Verfahren gemäß einem der vorstehenden Ansprüche, **dadurch gekennzeichnet, dass** die Lösung 2 bis 20 Gew.-% des besagten Kaseins enthält.

11. Verfahren gemäß einem der vorstehenden Ansprüche, **dadurch gekennzeichnet, dass** die Lösung 2 bis 16 Gew.-% und noch spezieller 2 bis 12 Gew.-% des besagten Kaseins enthält.

12. Verfahren gemäß einem der vorstehenden Ansprüche, **dadurch gekennzeichnet, dass** die Lösung 2 bis 7 Gew.-% insbesondere 2 bis 5 Gew.-% des Proteins enthält.

13. Verfahren gemäß einem der vorstehenden Ansprüche, **dadurch gekennzeichnet, dass** die Temperatur unterhalb von 85 °C liegt, und insbesondere 80 °C nicht übersteigt.

14. Verfahren gemäß einem der vorstehenden Ansprüche, **dadurch gekennzeichnet, dass** die Temperatur unterhalb von 75 °C und insbesondere unterhalb von 60 °C liegt.

15. Verfahren gemäß einem der vorstehenden Ansprüche, **dadurch gekennzeichnet, dass** die Temperatur größer oder gleich 30 °C ist.

16. Verfahren gemäß einem der vorstehenden Ansprüche, **dadurch gekennzeichnet, dass** der Alkaliionengehalt unterhalb von 7 mMol/g des Proteins liegt.

17. Verfahren gemäß einem der vorstehenden Ansprüche, **dadurch gekennzeichnet, dass** der Alkaliionengehalt weniger als 2,5 mMol/g Protein beträgt und insbesondere zwischen 0,05 und 2 mMol/g liegt.

18. Verfahren gemäß einem der vorstehenden Ansprüche, **dadurch gekennzeichnet, dass** der Alkaliionengehalt unterhalb von 1 mMol/g Protein und insbesondere unterhalb von 0,5 mMol/g liegt.

19. Verfahren gemäß einem der vorstehenden Ansprüche, **dadurch gekennzeichnet, dass** der Alklaiionengehalt unterhalb von 0,3 mMol/g Protein und insbesondere unterhalb von 0,15 mMol/g Protein liegt.

20. Verfahren gemäß einem der vorstehenden Ansprüche, **dadurch gekennzeichnet, dass** die Ausgangslösung zusätzlich mindestens einen Bestandteil enthält, der ausgewählt ist aus:
- in einem pH-Bereich von 4,5 bis 7 nichtkoagulierbaren Proteinen in einer Konzentration unterhalb von 5 %,
- Zuckern,
- Aromastoffen, und
- Fetten.

21. Gel, **dadurch gekennzeichnet, dass** es über ein Verfahren gemäß einem der vorstehenden Ansprüche erhalten werden kann.

22. Gel gemäß Anspruch 21, **dadurch gekennzeichnet, dass** es aus einem Milchretentat gewonnen wird.

23. Gel gemäß einem der Ansprüche 21 und 22, **dadurch gekennzeichnet, dass** es frei von einem Geliermittel, einem Koagulationsmittel und Grundschmelzsalzen ist.

24. Gel gemäß einem der Ansprüche 21 bis 23, **dadurch gekennzeichnet, dass** es frei von Proteasen ist.

25. Gel gemäß einem der Ansprüche 21 bis 24, **dadurch gekennzeichnet, dass** es im Wesentlichen frei von denaturierten Proteinen ist.

26. Gel gemäß einem der Ansprüche 21 bis 25, **dadurch gekennzeichnet, dass** sein Gehalt an besagtem koagulierbaren Protein unterhalb von 12 Gew.% und insbesondere unterhalb von 5 Gew.-% liegt.

27. Verwendung eines Gels gemäß einem der Ansprüche 21 bis 26 als Ausgangsprodukt zur Herstellung eines halbfesten oder festen Nahrungsmittels.

28. Verwendung eines Gels gemäß einem der Ansprüche 21 bis 26 als Ausgangsprodukt zur Herstellung eines halbfesten oder festen Nahrungsmittelprodukts auf Milchbasis.

## Claims

1. Process for the instant gelling, at a temperature freely chosen between 20 and 100°C, in the absence of coagulating agent, at a pH greater than the isoelectric pH, of a solution of a protein coagulable at the said isoelectric pH, the said gelling consisting in converting the said solution to a homogeneous gel occupying substantially the volume of the initial liquid, **characterized in that** there is used as starting material an aqueous solution containing, in the non-denatured state, at least one such coagulable protein, **in that** the said coagulable protein is a casein, **in that** the alkali metal ion content of the said solution is adjusted to a predetermined value, and **in that** the said solution, containing the said casein at a concentration at least equal to 1.5%, is heated to the said temperature freely chosen between 20 and 100EC, it being understood that the said predetermined value is such that the said solution gels instantly, at the said concentration, pH and temperature.

2. Process according to Claim 1, **characterized in that** the said solution is a milk ultrafiltration retentate.

3. Process according to Claim 2, **characterized in that** the said milk is cow's, goat's or sheep's milk.

4. Process according to either of Claims 2 and 3, **characterized in that** the alkali metal ion content of the said ultrafiltration retentate is adjusted by diafiltration.

5. Process according to any one of Claims 1 to 4, **characterized in that** the alkali metal ion content is adjusted by electrodialysis.

6. Process according to any one of the preceding claims, **characterized in that** the said pH is greater than 5.

7. Process according to any one of the preceding claims, **characterized in that** the said pH is at least 0.5 pH unit greater than the said isoelectric pH.

8. Process according to any one of the preceding claims, **characterized in that** the said pH is in the range going from 5.5 to 6.7, especially from 5.7 to 6.4, and in particular from 5.8 to 6.3.

9. Process according to any one of the preceding claims, **characterized in that** the said pH is in the range going from 5.8 to 6.3.

10. Process according to any one of the preceding claims, **characterized in that** the said solution contains from 2 to 20 % by weight of the said casein.

11. Process according to any one of the preceding claims, **characterized in that** the said solution comprises from 2 to 16% by weight, and in particular from 2 to 12% by weight of the said casein.

12. Process according to any one of the preceding claims, **characterized in that** the said solution contains from 2 to 7% by weight of protein, and in particular from 2 to 5%.

13. Process according to any one of the preceding claims, **characterized in that** the said temperature is less than 85EC, and in particular is not greater than 80EC.

14. Process according to any one of the preceding claims, **characterized in that** the said temperature is less than 75EC, and in particular is less than 60EC.

15. Process according to any one of the preceding claims, **characterized in that** the said temperature is greater than or equal to 30EC.

16. Process according to any one of the preceding claims, **characterized in that** the said alkali metal ion content is less than 7 millimol per gram of the said protein.

17. Process according to any one of the preceding claims, **characterized in that** the said alkali metal ion content is less than 2.5 millimol per gram of the said protein and in particular is between 0.05 and 2 millimol per gram.

18. Process according to any one of the preceding claims, **characterized in that** the said alkali metal ion content is less than 1 millimol per gram of the said protein, and in particular less than 0.5 millimol per gram of the said protein.

19. Process according to any one of the preceding claims, **characterized in that** the said alkali metal ion content is less than 0.3 millimol per gram of the said protein, and in particular less than 0.15 millimol per gram of the said protein.

20. Process according to any one of the preceding claims, **characterized in that** the said starting solution contains, in addition, at least one constituent chosen from:
- proteins non coagulable in the pH range of 4.5 - 7 at a concentration of less than 5%;
- sugars;
- flavouring ingredients;
- fatty substances.

21. Gel **characterized in that** it is capable of being obtained by the process according to any one of the preceding claims.

22. Gel according to Claim 21, **characterized in that** it is obtained from a milk retentate.

23. Gel according to either of Claims 21 and 22, **characterized in that** it is free of gelling agent, coagulating agent and emulsifying salts.

24. Gel according to any one of Claims 21 to 23, **characterized in that** it is free of protease.

25. Gel according to any one of Claims 21 to 24, **characterized in that** it is substantially free of denatured proteins.

26. Gel according to any one of Claims 21 to 25, **characterized in that** its content of the said coagulable protein is less than 12% by weight, and in particular less than 5% by weight.

27. Use of a gel according to any one of Claims 21 to 26, as starting material in the preparation of a semisolid or solid food product.

28. Use of a gel according to any one of Claims 21 to 26, as starting material in the preparation of a semisolid or solid dairy food product.
